# EUROPÄISCHE PATENTANMELDUNG

(11) **EP 1 641 295 A1**
(43) Veröffentlichungstag der Anmeldung: **29.03.2006**
(21) Anmeldenummer: 04022722.5
(22) Anmeldetag: 23.09.2004
(51) Int. Cl.: H04Q 7/36

(54) **Dezentrale dynamische Zuordnung von Zeitschlitzen eines Frequenzbandes zu Basisstationen eines Funkkommunikationsystems**

(71) Anmelder: SIEMENS AKTIENGESELLSCHAFT, 80333 München (DE)
(72) Erfinder: Franzen, Michael, 46395 Bocholt (DE); Obermanns, Sebastian, 46395 Bocholt (DE); Wisniowski, Damian, 46395 Bocholt (DE)

(57) **Zusammenfassung**

Die Erfindung betrifft ein Verfahren zum Betreiben eines netzseitige (BS1, BS2, BS3, BS4, BS5, BS6, BS7) und teilnehmerseitige Funkstationen umfassenden Funkkommunikationssystems, bei dem ein Frequenzband zur Kommunikation eingesetzt wird. In Zeitschlitzen steht das Frequenzband jeweils einer Teilmenge der netzseitigen Funkstationen (BS1, BS2, BS3, BS4, BS5, BS6, BS7) zur Kommunikation zur Verfügung. Erfindungsgemäß erfolgt eine Abstimmung der netzseitigen Funkstationen (BS1, BS2, BS3, BS4, BS5, BS6, BS7) untereinander darüber, welcher oder welchen netzseitigen Funkstationen (BS1, BS2, BS3, BS4, BS5, BS6, BS7) das Frequenzband in einem bestimmten Zeitschlitz zur Verfügung steht. Weiterhin betrifft die Erfindung eine netzseitige Funkstation und ein Computerprogrammprodukt zur Durchführung des Verfahrens.

## Beschreibung

Die Erfindung betrifft ein Verfahren zum Betreiben eines Funkkommunikationssystems, in welchem ein Frequenzband zur Kommunikation eingesetzt wird. Weiterhin betrifft die Erfindung eine netzseitige Funkstation und ein Computerprogrammprodukt zum Durchführen des Verfahrens.

In Funkkommunikationssystemen werden Nachrichten, beispielsweise mit Sprachinformation, Bildinformation, Videoinformation, SMS (Short Message Service), MMS (Multimedia Messaging Service) oder anderen Daten, mit Hilfe von elektromagnetischen Wellen über eine Funkschnittstelle zwischen sendender und empfangender Station übertragen. Bei den Stationen kann es sich hierbei je nach konkreter Ausgestaltung des Funkkommunikationssystems um verschiedenartige teilnehmerseitige Funkstationen oder netzseitige Funkstationen wie Basisstationen, Repeater oder Funkzugangspunkte handeln. In einem Mobilfunkkommunikationssystem handelt es sich bei zumindest einem Teil der teilnehmerseitigen Funkstationen um mobile Funkstationen. Das Abstrahlen der elektromagnetischen Wellen erfolgt mit Trägerfrequenzen, die in dem für das jeweilige System vorgesehenen Frequenzband liegen.

Mobilfunkkommunikationssysteme sind oftmals als zellulare Systeme z.B. nach dem Standard GSM (Global System for Mobile Communication) oder UMTS (Universal Mobile Telecommunications System) mit einer Netzinfrastruktur bestehend z.B. aus Basisstationen, Einrichtungen zur Kontrolle und Steuerung der Basisstationen und weiteren netzseitigen Einrichtungen ausgebildet. Außer diesen weiträumig organisierten (supralokalen) zellularen, hierarchischen Funknetzen gibt es auch drahtlose lokale Netze (WLANs, Wireless Local Area Networks) mit einem in der Regel räumlich deutlich stärker begrenzten Funkabdeckungsbereich. Die von den Funkzugangspunkten (AP: Access Point) der WLANs abgedeckten Zellen sind mit einem Durchmesser von beispielsweise einigen hundert Metern im Vergleich zu üblichen Mobilfunkzellen klein. Beispiele verschiedener Standards für WLANs sind HiperLAN, DECT, IEEE 802.11, Bluetooth und WATM.

Der Zugriff von Funkstationen auf das gemeinsame Übertragungsmedium wird bei Funkkommunikationssystemen durch Vielfachzugriffsverfahren/Multiplexverfahren (Multiple Access, MA) geregelt. Bei diesen Vielfachzugriffen kann das Übertragungsmedium im Zeitbereich (Time Division Multiple Access, TDMA), im Frequenzbereich (Frequency Division Multiple Access, FDMA), im Codebereich (Code Division Multiple Access, CDMA) oder im Raumbereich (Space Division Multiple Access, SDMA) zwischen den Funkstationen aufgeteilt werden. Auch Kombinationen von Vielfachzugriffsverfahren sind möglich, wie z.B. die Kombination eines Frequenzbereichs-Vielfachzugriffsverfahrens mit einem Codebereichs-Vielfachzugriffsverfahren.

Die Kapazität von Funkkommunikationssystemen wird durch die Interferenz limitiert. Eine Quelle dieser Interferenz ist die Gleichkanalinterferenz, d.h. Störungen, welche durch die Versendung von Signalen auf dem gleichen Frequenzband entstehen. In vielen Systemen, wie beispielsweise bei GSM, stehen mehrere Frequenzbänder zur Verfügung und benachbarte Basisstationen benutzen nicht gleichzeitig das gleiche Frequenzband. Bei UMTS werden die Frequenzbänder nicht zur Kanaltrennung benachbarter Zellen genutzt, so dass benachbarte Basisstationen auf dem gleichen Frequenzband mit teilnehmerseitigen Funkstationen kommunizieren. Es werden orthogonale Funkkanäle gebildet, indem die Signale verschiedener Basisstationen im Codebereich unterschieden werden. Eine weitere Möglichkeit zur Erzeugung orthogonaler Funkkanäle ist die Trennung im Zeitbereich, d.h. das Frequenzband steht in Zeitschlitzen nicht allen Basisstationen, sondern lediglich einer Teilmenge der Basisstationen zur Verfügung.

Der Erfindung liegt die Aufgabe zugrunde, ein effizientes Verfahren zum Betreiben eines Funkkommunikationssystems aufzuzeigen, in welchem den netzseitigen Funkstationen ein gemeinsames Frequenzband zur Verfügung steht. Weiterhin sollen eine netzseitige Funkstation und ein Computerprogrammprodukt zur Durchführung des Verfahrens aufgezeigt werden.

Diese Aufgabe wird durch ein Verfahren mit den Merkmalen des Anspruchs 1, sowie durch eine netzseitige Funkstation und ein Computerprogrammprodukt mit Merkmalen von nebengeordneten Ansprüchen gelöst. Vorteilhafte Ausgestaltungen und Weiterbildungen sind Gegenstand von Unteransprüchen.

Bei dem erfindungsgemäßen Verfahren wird in einem Funkkommunikationssystem, welches netzseitige und teilnehmerseitige Funkstationen umfasst, ein Frequenzband zur Kommunikation eingesetzt. In Zeitschlitzen steht das Frequenzband jeweils einer Teilmenge der netzseitigen Funkstationen zur Kommunikation zur Verfügung. Erfindungsgemäß erfolgt eine Abstimmung der netzseitigen Funkstationen darüber, welcher oder welchen netzseitigen Funkstationen das Frequenzband in einem bestimmten Zeitschlitz zur Verfügung steht.

In Zeitschlitzen steht das Frequenzband nicht allen netzseitigen Funkstationen, sondern nur einem Teil von ihnen zur Verfügung. Bei einem Zeitschlitz handelt es sich hierbei um eine bestimmte Zeitspanne. Die Zeitschlitze, während welchen als Ergebnis der Abstimmung unter den netzseitigen Funkstationen das Frequenzband netzseitigen Funkstationen zur Verfügung steht, können grundsätzlich alle die gleiche Länge aufweisen oder sich im Hinblick auf ihre Länge voneinander unterscheiden. Das erfindungsgemäße Verfahren kann in Bezug auf alle oder auch auf einen Teil der Zeitschlitze durchgeführt werden.

Steht das Frequenzband einer netzseitigen Funkstation in einem Zeitschlitz zur Verfügung, so kann sie das Frequenzband in dem jeweiligen Zeitschlitz dazu nutzen, mit teilnehmerseitigen und/oder mit netzseitigen Funkstationen zu kommunizieren, d.h. Nachrichten von teilnehmerseitigen Funkstationen zu empfangen und/oder an diese zu versenden, und/oder Nachrichten von netzseitigen Funkstationen zu empfangen und/oder an diese zu versenden. Neben dem Frequenzband, über welches die Abstimmung der netzseitigen Funkstationen erfolgt, können in dem Funkkommunikationssystems eines oder mehrere weitere Frequenzbänder verwendet werden, über welches oder welche die netzseitigen Funkstationen gegebenenfalls auch abstimmen können.

Im Rahmen der Abstimmung kommunizieren die netzseitigen Funkstationen miteinander, vorzugsweise ohne die Mitwirkung einer übergeordneten Instanz, wie z.B. einer Einrichtung zur Kontrolle der netzseitigen Funkstationen. Es existiert somit ein Informationsaustausch zwischen den netzseitigen Funkstationen, um den Zugriff auf das Frequenzband dezentral bzw. auf verteilte Weise zu koordinieren. Das erfindungsgemäße Verfahren kann in Bezug auf die Gesamtheit aller netzseitigen Funkstationen eines Funkkommunikationssystems durchgeführt werden, oder in Bezug auf eine Teilmenge dieser Gesamtheit, so z.B. auf die netzseitigen Funkstationen eines bestimmten Gebietes beschränkt.

In Weiterbildung der Erfindung erfolgt die Abstimmung derart, dass das Frequenzband in dem bestimmten Zeitschlitz nicht benachbarten netzseitigen Funkstationen zur Verfügung steht. Bei benachbarten netzseitigen Funkstationen grenzen die Funkzellen aneinander. Ist die Teilmenge der netzseitigen Funkstationen, welchen das Frequenzband gleichzeitig zur Verfügung steht, u.a. dadurch charakterisiert, dass diese netzseitigen Funkstationen nicht benachbart sind, wird durch Vermeidung von Interferenzen die Effizienz der Ausnutzung des Frequenzbandes erhöht.

Einer Ausgestaltung der Erfindung gemäß senden die netzseitigen Funkstationen im Rahmen der Abstimmung jeweils eine Nachricht, welche eine Zahl umfasst, deren Betrag von dem von der jeweiligen netzseitigen Funkstation für den bestimmten Zeitschlitz erwarteten Funkverkehrsumfang abhängt. Die Zahl kann neben dem erwarteten Funkverkehrsumfang von weiteren Parametern abhängen, wie z.B. von einer Priorisierung des erwarteten Funkverkehrsumfangs oder der Länge der Zeitspanne, während welcher der jeweiligen netzseitigen Funkstation das Frequenzband nicht zur Verfügung stand. Insbesondere kann es sich bei der Zahl um eine Zufallszahl handeln mit einer von dem von der jeweiligen netzseitigen Funkstation für den bestimmten Zeitschlitz erwarteten Funkverkehrsumfang abhängigen Wahrscheinlichkeitsdichte. Eine weitere Möglichkeit der Erzeugung der Zahl ist die Verwendung einer Funktion des erwarteten Funkverkehrsumfangs, welche mit steigendem erwarteten Funkverkehrsumfang stetig zunimmt, wie beispielsweise eine lineare Abhängigkeit der Zahl von dem erwarteten Funkverkehrsumfang.

Vorteilhaft ist es, wenn einer netzseitigen Funkstation das Frequenzband dann in dem bestimmten Zeitschlitz zur Verfügung steht, wenn diese netzseitige Funkstation eine höhere Zahl als alle ihr benachbarten netzseitigen Funkstationen sendet. Somit wertet die netzseitige Funkstation die Zahlen von allen ihr benachbarten netzseitigen Funkstationen aus und kann dem Vergleich dieser Zahlen mit der von ihre gesendeten Zahl entnehmen, ob ihr das Frequenzband zur Verfügung steht. Bei einer gleich hohen Zahl können weitere Kriterien zur Entscheidung darüber, welcher netzseitigen Funkstation das Frequenzband zur Verfügung steht, herangezogen werden.

In Weiterbildung der Erfindung erfolgt die Abstimmung durch eine Kommunikation der netzseitigen Funkstationen auf dem Frequenzband, und/oder auf einem anderen Frequenzband, und/oder über Leitung. Hierfür können verschiedenartige Schnittstellen zum Einsatz kommen, welche geeignet sind, netzseitige Funkstationen miteinander zu verbinden.

Es ist möglich, dass eine netzseitige Funkstation, welcher das Frequenzband aufgrund der Abstimmung in dem bestimmten Zeitschlitz zur Verfügung steht, während dem bestimmten Zeitschlitz mit mindestens einer teilnehmerseitigen Funkstation und/oder mit mindestens einer weiteren netzseitigen Funkstation auf dem Frequenzband kommuniziert.

Die erfindungsgemäße netzseitige Funkstation weist Mittel zum Durchführen einer Abstimmung mit weiteren netzseitigen Funkstationen darüber, welcher oder welchen netzseitigen Funkstationen das Frequenzband in einem bestimmten Zeitschlitz zur Verfügung steht, auf.

Das erfindungsgemäße Computerprogrammprodukt weist Mittel zum Erstellen von im Rahmen der Durchführung einer Abstimmung zwischen netzseitigen Funkstationen darüber, welcher oder welchen netzseitigen Funkstationen das Frequenzband in einem bestimmten Zeitschlitz zur Verfügung steht, zu versendenden Informationen auf und Mittel zum Auswerten von im Rahmen der Durchführung der Abstimmung empfangenen Informationen.

Unter einem Computerprogrammprodukt wird im Zusammenhang mit der vorliegenden Erfindung neben dem eigentlichen Computerprogramm (mit seinem über das normale physikalische Zusammenspiel zwischen Programm und Recheneinheit hinausgehenden technischen Effekt) insbesondere ein Aufzeichnungsträger für das Computerprogramm, eine Dateisammlung, eine konfigurierte Recheneinheit, aber auch beispielsweise eine Speichervorrichtung oder ein Server, auf der bzw. dem zum Computerprogramm gehörende Dateien gespeichert sind, verstanden.

Sowohl die erfindungsgemäße netzseitige Funkstation als auch das Computerprogrammprodukt eignen sich insbesondere zum Durchführen des erfindungsgemäßen Verfahrens, wobei dies auch auf die Ausgestaltungen und Weiterbildungen zutreffen kann. Hierzu können sie weitere geeignete Mittel aufweisen.

Im folgenden wird die Erfindung anhand eines Ausführungsbeispiels näher erläutert. Dabei zeigen:
- Figur 1:: ein Ausschnitt aus einem Funkkommunikationssystem,
- Figur 2:: die Versendung von Nachrichten zwischen Basisstationen.

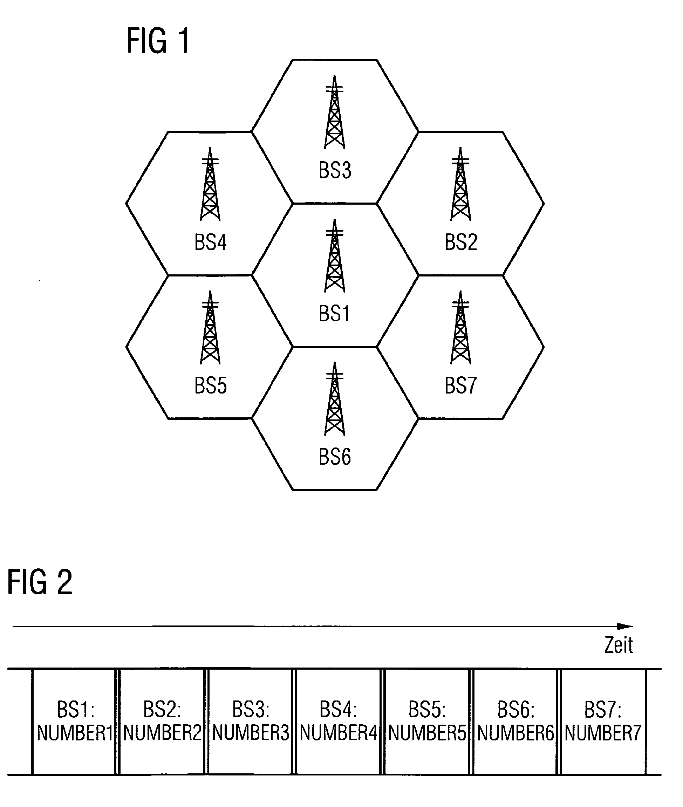

Figur 1 zeigt einen Ausschnitt aus einem zellularen Funkkommunikationssystem in Form eines Clusters von Basisstationen, welches aus der Basisstation BS1, sowie ihren benachbarten Basisstationen BS2, BS3, BS4, BS5, BS6 und BS7 besteht. Bei dem betrachteten Funkkommunikationssystem handelt sich um ein "single-frequency" Funkkommunikationssystem, d.h. allen Basisstationen des Funkkommunikationssystems steht gemeinsam ein einziges Frequenzband zur Verfügung. Zur Kommunikation mit -in Figur 1 nicht dargestellten- Teilnehmerstationen existieren Zeitschlitze. Das Frequenzband wird unter den Basisstationen so aufgeteilt, dass das Frequenzband in jedem der Zeitschlitze jeweils einer Teilmenge der Basisstationen zur Verfügung steht. Steht das Frequenzband einer Basisstation während einem bestimmten Zeitschlitz zur Verfügung, so kann sie während dieses Zeitschlitzes Nachrichten an Teilnehmerstationen senden und/oder Nachrichten von Teilnehmerstationen empfangen.

Erfindungsgemäß erfolgt die Verteilung des Frequenzbandes unter die Basisstationen bzw. die Vergabe des Frequenzbandes an die Basisstationen nicht unter Mitwirkung einer zentralen Einrichtung, sondern dezentral durch eine Abstimmung zwischen den Basisstationen. Figur 2 zeigt einen Nachrichtenaustausch zwischen den Basisstationen BS1 bis BS7 zur Abstimmung über einen Zeitschlitz. Zuerst sendet die Basisstation BS1 eine Zahl NUMBER1, dann sendet die Basisstation BS2 eine Zahl NUMBER2, dann sendet die Basisstation BS3 eine Zahl NUMBER3, dann sendet die Basisstation BS4 eine Zahl NUMBER4, dann sendet die Basisstation BS5 eine Zahl NUMBER5, dann sendet die Basisstation BS6 eine Zahl NUMBER6, und schließlich sendet die Basisstation BS7 eine Zahl NUMBER7. Bei den Zahlen NUMBER1 bis NUMBER7 handelt es sich um Zufallszahlen, welche die Basisstationen BS1 bis BS7 zuvor erzeugen. Bei der Erzeugung der Zufallszahlen wird von jeder Basisstation BS1 bis BS7 ihr erwartetes Verkehrsaufkommen auf dem Frequenzband berücksichtigt, d.h. je höher das erwartete Verkehrsaufkommen, desto größer ist die Wahrscheinlichkeit der Erzeugung einer großen Zufallszahl NUMBER1 bis NUMBER7. Die Wahrscheinlichkeitsdichte der Zufallszahlen hängt somit von dem Umfang des erwarteten Verkehrsaufkommens ab. Eine Basisstation, deren erwartetes Verkehrsaufkommen Null ist, erzeugt eine Null als zu sendende Zahl, Basisstationen mit höherer Last erzeugen mit höherer Wahrscheinlichkeit große Zahlen. Hierzu ist den Basisstationen BS1 bis BS7 bekannt, welchen Nachrichtenumfang die Teilnehmerstationen in ihrer jeweiligen Funkzelle in dem nächsten Zeitschlitz versenden und empfangen möchten.

Neben der beschriebenen Lastabhängigkeit der erzeugten Zufallszahlen können auch weitere Parameter in die Erzeugen der Zahlen miteinbezogen werden. Zum Beispiel kann die Wartezeit die Höhe der Zahl beeinflussen: eine Basisstation, welcher während mehreren Zeitschlitzen das Frequenzband nicht zur Verfügung stand, erzeugt mit größerer Wahrscheinlichkeit eine höhere Zahl.

Das Frequenzband steht derjenigen der Basisstationen BS1 bis BS7 zur Verfügung, welche die höchste der Zahlen NUMBER1 bis NUMBER7 versendet. Zur Abstimmung bedarf es nach der Versendung der Zahlen NUMBER1 bis NUMBER7 keine weitere Nachrichtenversendung innerhalb des betrachteten Clusters, da jede der Basisstationen BS1 bis BS7 die versendete Zahl NUMBER1 bis NUMBER7 jeder anderen Basisstation BS1 bis BS7 empfängt.

Als konkretes Beispiel wird der Fall betrachtet, dass die Basisstation BS1 die Zahl NUMBER1 mit dem Wert 40, die Basisstation BS2 die Zahl NUMBER2 mit dem Wert 30, und die Basisstation BS5 die Zahl NUMBER5 mit dem Wert 10. Die anderen Basisstationen BS3, BS4, BS6 und BS7 senden die Zahl Null oder senden keine Zahl, da die von ihnen erzeugte Zahl jeweils gleich Null ist. Im betreffenden Zeitschlitz steht daher das Frequenzband der Basisstation BS1 zur Verfügung, und nicht den Basisstationen BS2, BS3, BS4, BS5, BS6 und BS7.

Während in Figur 1 lediglich ein Cluster bestehend aus den Basisstationen BS1 bis BS7 dargestellt ist, existieren in dem Funkkommunikationssystem eine Vielzahl von sich überlappenden Clustern. Bezüglich der Nummerierung der Basisstationen innerhalb der Cluster wird so verfahren, dass Cluster gemäß dem in Figur 1 dargestellten Cluster aneinandergesetzt werden und somit ein flächendeckendes Muster entsteht. Mit Ausnahme der Basisstationen am Rand des Versorgungsgebietes des Funkkommunikationssystems sind alle Basisstationen Bestandteil einer Mehrzahl an Clustern, so ist beispielsweise jede Basisstation Mittelpunkt eines Clusters entsprechend der Basisstation BS1 der Figur 1. Es existieren somit Cluster mit Basisstationen mit der Nummerierung BS1 im Mittelpunkt, Cluster mit Basisstationen mit der Nummerierung BS2 im Mittelpunkt, usw., wobei diese Cluster sich gegenseitig überlappen. Die in Figur 2 dargestellte Versendung der Nachrichten mit den Zahlen NUMBER1 bis NUMBER7 erfolgt durch alle Basisstationen des Funkkommunikationssystems, wobei alle Basisstationen mit der Nummerierung BS1 gleichzeitig senden, alle Basisstationen mit der Nummerierung BS2 gleichzeitig senden, usw. Jede Basisstation empfängt die von ihren benachbarten Basisstationen gesendeten Zahlen und wertet diese aus. Von weiter entfernten, d.h. nicht benachbarten Basisstationen gesendete Signale werden nicht berücksichtigt. Eine Basisstation betrachtet das Frequenzband als ihr für den nächsten Zeitschlitz zur Verfügung stehend, wenn alle der ihr benachbarten Basisstationen eine niedrigere Zahl senden als sie selbst.

Senden benachbarte Basisstationen die gleiche Zahl, so kann ein weiteres Kriterium zur Entscheidung über die Zuordnung des Frequenzbandes zwischen diesen Basisstationen herangezogen werden, wie z.B. welche der Basisstationen die Zahl zuerst versendet hat oder welche der Basisstationen die höhere Nummer trägt. Zur Erhöhung der Chancengleichheit kann hierfür die Sendereihenfolge und/oder die Nummerierung der Basisstationen mit der Zeit variiert werden.

Das beschriebene Verfahren gewährleistet, dass in keinem Fall zwei benachbarten Basisstationen gleichzeitig das Frequenzband zur Verfügung steht. Hierdurch werden starke Interferenzen vermieden, wodurch das Frequenzband effektiv ausgenutzt wird. Ein zu großer Wiederholabstand, d.h. ein zu großer Abstand zwischen zwei Basisstationen, welchen gleichzeitig das Frequenzband zur Verfügung steht, ist jedoch nachteilhaft in Bezug auf die Ausnutzung der Funkressource. Ein großer Wiederholabstand entsteht z.B. dann, wenn eine Reihe von benachbarten Basisstationen monoton abfallende Zahlen senden. In diesem Fall steht der ersten Basisstation der Reihe das Frequenzband zur Verfügung, allen anderen Basisstationen der Reihe hingegen nicht. Um dies zu umgehen, kann eine Basisstation nicht die von ihre erzeugte Zahl, sondern eine Null senden, wenn sie feststellt, dass eine ihr benachbarte Basisstation eine Zahl gesendet hat, welche höher als die von ihr erzeugte Zahl ist. Diese Vorgehen erzeugt jedoch eine Ungleichverteilung in Bezug auf die Basisstationen, welche bei der Abstimmung "gewinnen", abhängig von der Reihenfolge der Versendung während der Abstimmung. Um dies zu umgehen, kann die Sendereihenfolge während der Abstimmung rotiert werden.

Wie in Figur 2 dargestellt, ist die Zeitspanne der Abstimmung in eine Mehrzahl an Unterabschnitten aufgeteilt, wobei während jedem Unterabschnitt genau eine Basisstation eines Clusters sendet, während die anderen Basisstationen des Clusters empfangen. Die Anzahl der Unterabschnitte, welche gegebenenfalls durch kurze Pausen zur Kompensation von Laufzeitfehlern und Fehlern in der Rahmensynchronisation getrennt sein können, entspricht der Anzahl an Basisstationen eines Clusters, d.h. der Anzahl an benachbarten Basisstationen einer jeden Basisstation plus Eins. Die Kodierung der während der Abstimmung gesendeten Informationen sollte robust sein, so dass der Empfang des Signals einer benachbarten Basisstation trotz der Aussendung von Signalen von weiter entfernten Basisstationen mit der gleichen Nummerierung weitgehend fehlerfrei ist.

Anstelle der bisher beschriebenen Zufallszahlen ist es auch möglich, dass eine Funktion ohne Zufallscharakter zur Erzeugung der bei der Abstimmung verwendeten Zahlen verwendet wird, so dass für jede Basisstation die erzeugte Zahl bei gegebenem Funkverkehrsaufkommen gleich ist und mit der Höhe des Funkverkehrsaufkommens ansteigt. Dies hat jedoch den Nachteil, dass z.B. einer Basisstation mit einem mittleren Funkverkehrsaufkommen, welche benachbart ist zu einer Basisstation mit hohem Funkverkehrsaufkommen, nie oder sehr selten das Frequenzband zur Verfügung steht.

Der in Figur 2 dargestellte Austausch von Signalisierungsnachrichten zwischen den Basisstationen BS1 bis BS7 kann auf dem Frequenzband erfolgen, über dessen Vergabe sich die Basisstationen BS1 bis BS7 abstimmen. In diesem Fall ist es zweckmäßig, wenn nach der in Figur 2 dargestellten Zeitspanne der Abstimmungsnachrichten derjenige Zeitschlitz folgt, über welchen die Abstimmung in der in Figur 2 dargestellten Zeitspanne erfolgte. Nach dem Zeitschlitz folgt wieder eine Zeitspanne zur Abstimmung, gefolgt von einem Zeitschlitz, usw. Es wird somit von den Basisstationen BS1 bis BS7 in einer Zeitspanne der Abstimmung jeweils über den folgenden Zeitschlitz abgestimmt. Die Zeitschlitze, welche zur Kommunikation mit den Teilnehmerstationen genutzt werden können, sind somit unterbrochen durch Zeitspannen, welche zur Abstimmung unter den Basisstationen genutzt werden. Hierbei ist es auch möglich, dass die Basisstationen sich nicht über den nächsten, sondern über den übernächsten oder einen weiter entfernten Zeitschlitz abstimmen.

Alternativ kann zur Abstimmung auch ein anderes, insbesondere ein schmalbandigeres Frequenzband eingesetzt werden, so dass das breite Frequenzband nicht für die Abstimmung zwischen den Basisstationen "verschwendet" wird. In diesem Fall kann die Abstimmung parallel zur Lage eines Zeitschlitzes erfolgen. Zweckmäßigerweise erfolgt während eines Zeitschlitzes die Abstimmung bezüglich des nächsten Zeitschlitzes, es kann jedoch auch betreffend den übernächsten oder einen weiter entfernten Zeitschlitz abgestimmt werden. Das andere Frequenzband kann in einem Frequenzbereich liegen, welcher die Verwendung einer anderen Funktechnologie erforderlich macht, wie z.B. den Richtfunk für Funkfrequenzen im Infrarotbereich.

Des Weiteren ist es auch möglich, dass die Abstimmung zwischen den Basisstationen nicht per Funk, sondern über Leitung erfolgt. In diesem Fall, wie auch bei Verwendung eines anderen Frequenzbandes zur Abstimmung, können die Zeitschlitze zur Kommunikation mit den Teilnehmerstationen auf dem Frequenzband direkt aufeinander folgen, ohne Unterbrechung für die Abstimmungszeitspanne.

Bisher wurde der Fall betrachtet, dass die Basisstationen das Frequenzband, wenn es ihnen zur Kommunikation zur Verfügung steht, zur Kommunikation mit Teilnehmerstationen, welche sich in ihrer jeweiligen Funkzelle befinden, nutzen. Zusätzlich oder alternativ ist es möglich, dass eine Basisstation das ihr zur Verfügung stehende Frequenzband nutzt, indem sie mit einer oder mehreren anderen Basisstationen kommuniziert. Dies ist insbesondere vorteilhaft für Basisstationen in Form von netzseitigen Relaisstationen, welche im Gegensatz zu den üblichen Basisstationen nicht an das Infrastrukturnetz des Funkkommunikationssystems angeschlossen sind, sondern die von ihnen empfangenen Nachrichten an andere Relaisstationen oder Basisstationen weiterleiten.

Das beschriebene Funkkommunikationssystem, in welchem das Frequenzband einer jeden Zelle nicht immer, sondern nur zu durch die Abstimmung unter den Basisstationen ermittelten Zeiten zur Verfügung steht, eignet sich insbesondere für burstartigen Funkverkehr (burst: englisch für Ausbruch), wie z.B. für Web-Browsing und Interactive Gaming. Dies rührt daher, dass diese spontanen Datentransmissionen in benachbarten Funkzellen häufig nicht gleichzeitig erfolgen. Durch die Abstimmung zwischen den Basisstationen werden ungleiche Lastverteilungen in den Funkzellen berücksichtigt, da einer Basisstation, in deren Zelle ein hohes Funkverkehrsaufkommen herrscht, das Frequenzband öfter zur Verfügung steht als einer Basisstation, in deren Zelle lediglich ein geringes Funkverkehrsaufkommen vorhanden ist.

Während im konkreten Beispiel ein Cluster der Größe 7 betrachtet wurde, können die im Rahmen der Erfindung verwendeten Cluster an sich eine beliebige Größe aufweisen. So kann ein Cluster auch nicht benachbarte Basisstationen umfassen.

Vorteilhaft bei dem beschriebenen Verfahren ist, dass der Signalisierungsaufwand, welcher während der Abstimmung anfällt, unabhängig von der Anzahl und dem Funkverkehrsaufkommen der Teilnehmerstationen ist. Dies liegt darin begründet, dass an der Abstimmung ausschließlich die Basisstationen beteiligt sind, deren Anzahl fix ist und denen jeweils eine vorgegebene Zeitspanne zur Versendung ihrer für die Abstimmung nötigen Informationen zur Verfügung steht.

## Patentansprüche

1. Verfahren zum Betreiben eines netzseitige (BS1, BS2, BS3, BS4, BS5, BS6, BS7) und teilnehmerseitige Funkstationen umfassenden Funkkommunikationssystems, bei dem ein Frequenzband zur Kommunikation eingesetzt wird, in Zeitschlitzen das Frequenzband jeweils einer Teilmenge der netzseitigen Funkstationen (BS1, BS2, BS3, BS4, BS5, BS6, BS7) zur Kommunikation zur Verfügung steht,
**dadurch gekennzeichnet,**
**dass** eine Abstimmung der netzseitigen Funkstationen (BS1, BS2, BS3, BS4, BS5, BS6, BS7) untereinander darüber erfolgt, welcher oder welchen netzseitigen Funkstationen (BS1, BS2, BS3, BS4, BS5, BS6, BS7) das Frequenzband in einem bestimmten Zeitschlitz zur Verfügung steht.

2. Verfahren nach Anspruch 1,
**dadurch gekennzeichnet,**
**dass** die Abstimmung derart erfolgt, dass das Frequenzband in dem bestimmten Zeitschlitz nicht benachbarten netzseitigen Funkstationen (BS1, BS2, BS3, BS4, BS5, BS6, BS7) zur Verfügung steht.

3. Verfahren nach Anspruch 1 oder 2,
**dadurch gekennzeichnet,**
**dass** im Rahmen der Abstimmung die netzseitigen Funkstationen (BS1, BS2, BS3, BS4, BS5, BS6, BS7) jeweils eine Nachricht senden umfassend eine Zahl (NUMBER1, NUMBER2, NUMBER3, NUMBER4, NUMBER5, NUMBER6, NUMBER7) deren Betrag von dem von der jeweiligen netzseitigen Funkstation (BS1, BS2, BS3, BS4, BS5, BS6, BS7) für den bestimmten Zeitschlitz erwarteten Funkverkehrsumfang abhängt.

4. Verfahren nach Anspruch 3,
**dadurch gekennzeichnet,**
**dass** es sich bei der Zahl (NUMBER1, NUMBER2, NUMBER3, NUMBER4, NUMBER5, NUMBER6, NUMBER7) um eine Zufallszahl mit einer von dem von der jeweiligen netzseitigen Funkstation (BS1, BS2, BS3, BS4, BS5, BS6, BS7) für den bestimmten Zeitschlitz erwarteten Funkverkehrsumfang abhängigen Wahrscheinlichkeitsdichte handelt.

5. Verfahren nach Anspruch 3 oder 4,
**dadurch gekennzeichnet,**
**dass** einer netzseitigen Funkstation (BS1, BS2, BS3, BS4, BS5, BS6, BS7) das Frequenzband dann in dem bestimmten Zeitschlitz zur Verfügung steht, wenn diese netzseitige Funkstation (BS1, BS2, BS3, BS4, BS5, BS6, BS7) eine höhere Zahl (NUMBER1, NUMBER2, NUMBER3, NUMBER4, NUMBER5, NUMBER6, NUMBER7) als alle ihr benachbarten netzseitigen Funkstationen (BS1, BS2, BS3, BS4, BS5, BS6, BS7) sendet.

6. Verfahren nach einem der Ansprüche 1 bis 5,
**dadurch gekennzeichnet,**
**dass** die Abstimmung erfolgt durch eine Kommunikation der netzseitigen Funkstationen (BS1, BS2, BS3, BS4, BS5, BS6, BS7)
• auf dem Frequenzband, und/oder
• auf einem anderen Frequenzband, und/oder
• über Leitung.

7. Verfahren nach einem der Ansprüche 1 bis 6,
**dadurch gekennzeichnet,**
**dass** eine netzseitige Funkstation (BS1, BS2, BS3, BS4, BS5, BS6, BS7), welcher das Frequenzband aufgrund der Abstimmung in dem bestimmten Zeitschlitz zur Verfügung steht, während dem bestimmten Zeitschlitz mit mindestens einer teilnehmerseitigen Funkstation und/oder mit mindestens einer weiteren netzseitigen Funkstation (BS1, BS2, BS3, BS4, BS5, BS6, BS7) auf dem Frequenzband kommuniziert.

8. Netzseitige Funkstation (BS1, BS2, BS3, BS4, BS5, BS6, BS7) für ein weitere netzseitige Funkstationen (BS1, BS2, BS3, BS4, BS5, BS6, BS7) und teilnehmerseitige Funkstationen umfassendes Funkkommunikationssystem,
wobei in dem Funkkommunikationssystem ein Frequenzband zur Kommunikation eingesetzt wird, welches in Zeitschlitzen jeweils einer Teilmenge der netzseitigen Funkstationen (BS1, BS2, BS3, BS4, BS5, BS6, BS7) zur Kommunikation zur Verfügung steht,
**gekennzeichnet durch**
Mittel zum Durchführen einer Abstimmung mit weiteren netzseitigen Funkstationen (BS1, BS2, BS3, BS4, BS5, BS6, BS7) darüber, welcher oder welchen netzseitigen Funkstationen (BS1, BS2, BS3, BS4, BS5, BS6, BS7) das Frequenzband in einem bestimmten Zeitschlitz zur Verfügung steht.

9. Computerprogrammprodukt für eine netzseitige Funkstation (BS1, BS2, BS3, BS4, BS5, BS6, BS7) für ein weitere netzseitige Funkstationen (BS1, BS2, BS3, BS4, BS5, BS6, BS7) und teilnehmerseitige Funkstationen umfassendes Funkkommunikationssystem,
wobei in dem Funkkommunikationssystem ein Frequenzband zur Kommunikation eingesetzt wird, welches in Zeitschlitzen jeweils einer Teilmenge der netzseitigen Funkstationen (BS1, BS2, BS3, BS4, BS5, BS6, BS7) zur Kommunikation zur Verfügung steht,
**gekennzeichnet durch**
Mittel zum Erstellen von im Rahmen der Durchführung einer Abstimmung zwischen netzseitigen Funkstationen (BS1, BS2, BS3, BS4, BS5, BS6, BS7) darüber, welcher oder welchen netzseitigen Funkstationen (BS1, BS2, BS3, BS4, BS5, BS6, BS7) das Frequenzband in einem bestimmten Zeitschlitz zur Verfügung steht, zu versendenden Informationen und Mittel zum Auswerten von im Rahmen der Durchführung der Abstimmung empfangenen Informationen.
